# EUROPÄISCHE PATENTSCHRIFT

(11) **EP 2 522 990 B1**
(45) Veröffentlichungstag und Bekanntmachung des Hinweises auf die Patenterteilung: **08.04.2015**
(21) Anmeldenummer: 12167232.3
(22) Anmeldetag: 09.05.2012
(51) Int. Cl.: G01N 21/15, G01N 21/85

(54) **Fotometer zur In-situ-Messung in Flüssigkeiten**
Photometer for in-situ measurement in liquids
Photomètre pour mesure in situ dans des liquides

(30) Priorität: 09.05.2011 DE 102011075530
(43) Veröffentlichungstag der Anmeldung: 14.11.2012
(73) Patentinhaber: WTW Wissenschaftlich-Technische Werkstätten GmbH, 82362 Weilheim (DE)
(72) Erfinder: Holeczek, Michael, 82362 Weilheim (DE); Seibt, Heike, 82362 Weilheim (DE); Rettig, Ulrich, 82407 Wielenbach (DE); Agah, Amir, 82362 Weilheim (DE); Holderried, Marlene, 86956 Schongau (DE); Benz, Thomas, 82362 Weilheim (DE)
(74) Vertreter: DREISS Patentanwälte PartG mbB

(56) Entgegenhaltungen:
- EP-B1- 1 472 521
- DE-A1- 2 420 060
- DE-A1- 19 811 876
- DE-A1-102007 029 536
- DE-A1-102009 028 254
- DE-C2- 3 839 561

## Beschreibung

Die vorliegende Erfindung betrifft ein Fotometer zur Messung von fotometrischen Größen in Fluiden, insbesondere zur Bestimmung von Inhaltsstoffen und Konzentrationen von Stoffen in flüssigen Medien nach dem Oberbegriff des Anspruchs 1. Die Erfindung bezieht sich auf solche Fotometer, die für eine In-situ-Messung in flüssigen Medien angepasst sind, d. h. mit welchen eine Messung an Ort und Stelle durchgeführt werden kann. Solche Fotometer werden beispielsweise zur Bestimmung von Inhaltsstoffen im Trinkwasser, Meerwasser oder in Abwässern verwendet. Die Sonde des Fotometers wird dazu in das Wasser oder die wässrige Lösung vollständig eingetaucht, und über optische oder elektrochemische Einrichtungen werden Inhaltsstoffe wie beispielsweise der Nitratgehalt des Wassers gemessen.

Bei der Untersuchung verschiedener Medien (Fluiden) wie Gasen oder wässrigen Lösungen müssen bisher Proben entnommen werden und diese in ein Labor transportiert werden, damit dort die Analyse des Inhalts der Probe durchgeführt werden kann. Dabei muss möglichst die entnommene Probe ohne Veränderung in ihrer Zusammensetzung transportiert werden. Die Ergebnisse der Analyse stehen erst zu einem späteren Zeitpunkt zur Verfügung. Nachteilig bei der Analyse von flüssigen Medien im Labor ist ferner, dass eine kontinuierliche Überwachung von Messgrößen vor Ort nicht möglich ist. Die vorliegende Erfindung betrifft daher solche Fotometer bzw. Messsonden, welche speziell für eine Messung an Ort und Stelle im Medium selbst verwendet werden. Diese werden auch als sogenannte In-situ-Messungen bezeichnet.

Im Stand der Technik sind verschiedene derartige Fotometer bekannt, die sich zumeist optischer Systeme zur Analyse des flüssigen Mediums bedienen. In der Regel weisen derartige herkömmliche Fotometer einen Sender und einen Empfänger auf, die über eine Messstrecke einen Messstrahl erzeugen, so dass die Absorption von Licht im Medium gemessen werden kann. Der Messstrahlsender und der Messstrahlempfänger sind dabei in einem geschlossenen Gehäuse aufgenommen und mit lichtdurchlässigen Fenstern versehen, damit der Messstrahl in das zu untersuchende Medium geleitet werden kann. Die bisher verwendeten Systeme solcher auf optischer Messung basierenden Fotometer unterscheiden sich dabei zum einen in dem Wellenlängenbereich des verwendeten Messstrahls. In DE 38 39 561 C1 beispielsweise ist eine Fotometermesseinrichtung mit einer flüssigkeitsdicht gekapselten Tauchsonde offenbart, die unter Verwendung von UV-Licht einen Messstrahl durch gegenüberliegende Fenster aus dem Gehäuse heraus durch das Medium sendet. Dieses bekannte Fotometer verwendet zwei verschiedene Messwellenlängen, wobei eine Einrichtung zum Zerlegen des UV-Lichts in einerseits eine Messwertwellenlänge und andererseits eine Referenzwertwellenlänge vorgesehen ist. Aus einem Vergleich der beiden Wellenlängen, einerseits des Messwertes und andererseits der Referenz, kann durch Berechnungen der Anteil von Partikeln der zu untersuchenden Substanz in der Flüssigkeit bestimmt werden. Als Mittel zur Zerlegung des einzigen Messstrahls aus UV-Licht in einerseits die Messwertwellenlänge und andererseits die Referenzwertwellenlänge wird hier beispielsweise ein Gitter verwendet, so dass der UV-Lichtstrahl spektral aufgeteilt wird. Die Erfassung der beiden Wellenlängen erfolgt dann mittels separater Detektoren.

Andere im Stand der Technik bekannte Fotometer benutzen für die Messung fotometrischer Größen eine Aufteilung des Messstrahls in zwei unterschiedliche Strahlengänge. In DE 33 24 606 A erfolgt dies durch Filter. Bei DE 44 07 332 C2 wird die Splittung der Strahlengänge über Lichtleiter durchgeführt. Bei der bekannten Vorrichtung aus AT 408 488 B wiederum wird ein durch eine Lichtquelle erzeugter Messstrahl mittels einer optischen Linse speziell gebündelt, so dass der Strahl einerseits in einen Messstrahl und andererseits einen Referenzstrahl aufgeteilt werden kann. Der Messstrahl wird durch Fenster in einen Messspalt geleitet, in welchem das zu untersuchende Medium sich befindet. Der Referenzstrahl wird im Inneren eines Gehäuses des Fotometers geleitet. Die Erfassung von einerseits dem Messstrahl und andererseits dem Referenzstrahl wird hier durch einen Strahlselektor in Form einer rotierenden Scheibe mit Löchern verwirklicht, so dass zu unterschiedlichen Zeitpunkten jeweils die Intensitäten von dem Referenzstrahl und dem Messstrahl erfasst werden. Auch hier erfolgt eine Auswertung auf Grundlage eines Vergleichs zwischen dem Referenzstrahl und dem Messstrahl. Eine Referenzierung der Messung beispielsweise über einen getrennt verlaufenden Referenzstrahl ist bei solchen Fotometern erforderlich, um eine Veränderung der optischen Einrichtungen aufgrund der Alterung von Komponenten zu kompensieren. Wenn solche Fotometer an Ort und Stelle in einer Flüssigkeit über einen längeren Zeitraum eingesetzt werden, kann es aufgrund von Alterungserscheinungen dazu kommen, dass die Messparameter sich ändern. Daher wird der vom Messstrahlsender ausgestrahlte Messstrahl von Zeit zu Zeit über einen Referenzweg geleitet, in welchem eine bekannte und stabile Absorption herrscht. Solche Fotometer oder Spektrometer werden im Labor dafür mit Referenzelementen überprüft, welche anstatt von Messproben in den Messstrahl gehalten werden. Bei den die vorliegende Erfindung betreffenden In-situ-Fotometern ist dies nicht möglich. Aus diesem Grund wurden im Stand der Technik die oben beschriebenen Systeme entwickelt, welche entweder mit unterschiedlichen Wellenlängen oder mit einer Splittung des Strahlengangs des Messstrahls und einer Verwendung von verschiedenen Detektoren für den gesplitteten Strahl arbeiten.

In DE 10 2007 029 536 ist ein weiteres Fotometer zur Messungen von Stoffkonzentrationen ein Flüssigkeiten offenbart.

Die Aufgabe der vorliegenden Erfindung besteht darin, ein Fotometer für In-situ-Messungen bereitzustellen, welches Messungen über einen größeren Wellenlängenbereich mit möglichst einfachen Mitteln erlaubt und welches aufgrund der Qualität seiner Referenzierung auch langfristige Messungen in insbesondere flüssigen Medien erlaubt.

Diese Aufgabe wird mit einem Fotometer mit den Merkmalen nach Anspruch 1 gelöst. Vorteilhafte Ausgestaltungen und Weiterbildungen sind Gegenstand der abhängigen Ansprüche.

Auf diese Weise kann innerhalb des geschlossenen Gehäuses des Fotometers ein Messstrahl zwischen dem Messstrahlsender und dem Messstrahlempfänger gezielt verstellt bzw. verlagert werden von einerseits dem Messkanal in andererseits eine Position, in welcher der Messstrahl durch einen Referenzkanal im Inneren des Gehäuses verläuft. Die Umlenkung des Messstrahls erfolgt erfindungsgemäß durch eine gezielte Verstellung eines Trägerteils im Inneren des Gehäuses des Fotometers. Die Verstellung des Trägerteils erfolgt auf einer vorherbestimmt definierten Bahn (B), so dass die lagegenaue Positionierung und Nullpunktnachführung des Messstrahls trotz Verwendung der gleichen Sender- und Empfangselemente möglich ist. Auf diese Weise kann das Fotometer auch in beliebigen Wellenlängenbereichen eingesetzt werden, so dass die Variabilität in der Messung von unterschiedlichen Stoffen etc. deutlich erhöht ist. Zum anderen ist keine aufwendige elektronische oder mechanische Aufteilung des Messstrahls in einen Referenzanteil und einen Messanteil erforderlich. Die hierfür im Stand der Technik notwendigen elektronischen oder optischen Mittel sind entbehrlich. Durch eine gezielte Verstellung der Position des Messstrahls in einerseits eine Messposition (längs eines Messkanals) und andererseits der Position eines Referenzkanals kann des Weiteren der räumliche Abstand zwischen dem Messkanal und dem Referenzkanal vergleichsweise groß gewählt werden. Ein Vorteil hiervon ist, dass die möglichen Störungen zwischen einem Referenzstrahl und einem Messstrahl verringert sind. Der Abstand zwischen dem Messkanal und dem Referenzkanal ist vorzugsweise nach der Erfindung so groß, dass geeignete optische Abdichtungsmittel, Strahlenfallen etc. leicht untergebracht werden können. Das Fotometer nach der Erfindung ermöglicht dadurch einen relativ hohen Dynamikbereich, und ein optisches Übersprechen oder ein Stören der Messungen wird aufgrund des abgetrennten Referenzkanals weitestgehend vermieden. Weiterhin hat das erfindungsgemäße Fotometer den Vorteil, dass die Anzahl von notwendigen Bauteilen im Inneren des Gehäuses reduziert ist. Es sind keine verschiedenen Empfangselemente oder Sensoren für die Referenzmessung und die eigentliche Messung im Medium erforderlich. Nicht zuletzt gewährleistet das erfindungsgemäße Fotometer eine langfristige und genaue Messung von fotometrischen Größen über einen viel größeren Wellenlängenbereich als bisher im Stand der Technik. Die Wellenlängen des Messstrahls können je nach Absorptionsstärke des zu untersuchenden Stoffs weitestgehend beliebig eingestellt werden. Beispielsweise ist das erfindungsgemäße Fotometer besonders geeignet, Stoffe wie Nitrat, Nitrit oder andere organische Verbindungen in einem Wasser oder einer wässrigen Lösung festzustellen.

Nach einer vorteilhaften Ausgestaltung der Erfindung sind der Messstrahlsender und der Messstrahlempfänger auf einem gemeinsamen Trägerteil im Gehäuse montiert, welches auf einer linearen Bahn (B) zur Verstellung des Messstrahls bewegbar ist. Die erfindungsgemäße Umlenkung des Messstrahls im Inneren des Gehäuses des Fotometers erfolgt damit in einer Art Parallelverschiebung. Der Messstrahlsender und der Messstrahlsempfänger werden gemeinsam mit dem sie tragenden Trägerbauteil verschoben. Die relative Position von Sender zu Empfänger ist damit sicher gewährleistet, und die Verstellung des Trägerteils kann mit vergleichsweise einfachen Mitteln realisiert werden.

Nach einer weiteren vorteilhaften Ausgestaltung der Erfindung ist der Messstrahl des Fotometers auf einer vorgegebenen kreisförmigen Bahn (B) zwischen dem Messkanal und dem Referenzkanal verstellbar. Eine vorgegebene kreisförmige Bahn (B) des Messstrahls kann beispielsweise durch eine Rotation von einem oder mehreren der Trägerbauteile im Inneren des Gehäuses realisiert sein. Die Umlenkung des Messstrahls auf eine Kreisbahn hat den Vorteil, dass sie in einem kreisrunden Rohrelement des Fotometers als gekapseltes Gehäuse gut integrierbar ist. Zudem ist die kreisförmige Bahn im Vergleich zur geradlinigen Verschiebung des Messstrahls einfacher, platzsparender und mit geringeren Toleranzen in der Positionierung der an der Messung beteiligten Bauteile ausführbar.

Nach einer weiteren vorteilhaften Ausgestaltung der Erfindung weisen der Messkanal und der Referenzkanal eine im Wesentlichen gleiche Geometrie auf, insbesondere einen gleichen Querschnitt und/oder eine in etwa gleiche Länge. Die Steuerung und Verstellung des Messstrahls ist damit relativ einfach durchführbar, und zwar dies mit den gleichen Komponenten sowohl bei der Messung der Lichtintensitäten im Messkanal als auch bei der Messung im Referenzkanal. Insbesondere können die Nullpunktnachführung und die Strahlerzeugung mit identischen Komponenten durchgeführt werden.

Nach einer weiteren vorteilhaften Ausgestaltung der Erfindung ist die Messung der Intensitätswerte einerseits im Messkanal und andererseits im Referenzkanal mit identischen Parametern und/oder Komponenten realisiert. Für die Messung eines bestimmten Stoffgehalts in der Flüssigkeit werden damit ein und dieselben Einstellungen des Fotometers verwendet zum Referenzieren einerseits und zum Messen andererseits. Für die Messung unterschiedlicher Stoffe mit unterschiedlichem Absorptionsverhalten kann selbstverständlich die jeweilige erforderliche Wellenlänge des Messstrahls entsprechend eingestellt werden.

Nach einer weiteren vorteilhaften Ausgestaltung der Erfindung ist der Querschnitt des Messstrahls des Fotometers geringer als der Querschnitt des Messkanals und des Referenzkanals. Mit anderen Worten, der Messstrahlquerschnitt wird speziell auf einen Durchmesser eingestellt, der absichtlich kleiner ist als der Querschnitt im Messkanal und im Referenzkanal, durch welchen der Messstrahl je nach Einstellung des beweglichen Trägerteils geleitet werden. Vorzugsweise kann der Querschnitt des Messstrahls auf 3/4 der Größe der Kanalquerschnitte eingestellt sein. Für die Einstellung der Querschnittsgröße des Messstrahls können vorzugsweise nach der Erfindung Blenden und Linsen im Bereich des Messstrahlsenders eingesetzt werden. Der Messstrahl kann auch im Messstrahlsender direkt fokussiert werden und auf einen kleineren Querschnitt als denjenigen der beiden Kanäle eingestellt werden. Der Vorteil hiervon ist, dass mit dem Fotometer eine hohe Reproduzierbarkeit in der Positionierung des Messstrahls erreicht werden kann. Außerdem wird verhindert, dass aufgrund von Reflektionen und Ablenkungen an den inneren Wänden im Messkanal bzw. Referenzkanal entstehen, welche einen negativen Einfluss auf die Erhebung der Messwerte bzw. der Intensitätswerte haben können. Insgesamt ist hierdurch eine genauere und zuverlässigere Messung möglich.

Nach einer weiteren vorteilhaften Ausgestaltung ist der Messstrahlsender des Fotometers auf einem ersten Trägerteil und der Messstrahlempfänger auf einem zweiten Trägerteil montiert, und beide Trägerteile sind mit einer Welle starr verbunden, die um eine Rotationsachse im Inneren des Gehäuses drehbar montiert ist. Der Messstrahlempfänger sowie der Messstrahlsender des Fotometers sind damit auf einer kreisförmigen Bahn, beispielsweise einem Halbkreis, im Inneren des Gehäuses verstellbar. Die relative Lage von Messstrahlempfänger und Messstrahlsender wird dadurch nicht beeinflusst, da beide über die starr mit den Trägerteilen verbundene Welle zur genauen Messung miteinander gekoppelt sind. Diese Maßnahme hat den Vorteil, dass eine präzise Umlenkung des Messstrahls in relativ geringer Baugröße realisierbar ist. Die drehende Verstellung der für die Erzeugung des Messstrahls relevanten Bauteile kann mit einem einzigen Aktuator bewirkt werden. Die Rotationsverstellung der drehbaren Welle kann beispielsweise um 180° erfolgen, so dass die Position des Messkanals am weitesten entfernt ist von derjenigen des Referenzkanals, so dass eine möglichst geringe oder gar keine Beeinflussung der jeweiligen Messungen gegeben ist.

Nach einer weiteren vorteilhaften Ausgestaltung ist der Messstrahlsender auf einem Trägerteil montiert, welches mit einer um eine Rotationsachse drehbaren Welle starr verbunden ist, und der Messstrahlempfänger ist mit seiner Mittelpunktachse in der Rotationsachse dieser Welle angeordnet, wobei Mittel zum Umlenken des Messstrahls in Richtung auf den Messstrahlempfänger vorgesehen sind. Der Messstrahlempfänger und die zum Messstrahlempfänger gehörenden optischen Bauteile müssen dadurch nicht im Inneren des Gehäuses des Fotometers bewegt werden. Die starre Positionierung des Messstrahlempfängers in der Rotationsachse hat den Vorteil, dass die Messgenauigkeit weiter erhöht ist. Eine Umlenkung des Messstrahls aus der Achse des Messkanals bzw. derjenigen des Referenzkanals kann beispielsweise durch einfache Spiegel erfolgen.

Nach einer weiteren vorteilhaften Ausgestaltung der Erfindung sind sowohl der Messstrahlsender als auch der Messstrahlempfänger mit ihrer Mittelpunktachse jeweils in der Rotationsachse einer drehbaren Welle angeordnet, welche starr mit mindestens einem Trägerteil verbunden ist, das optische Mittel zur Umlenkung des Messstrahls aufweist. Die Bauteile des Messstrahlsenders und diejenigen des Messstrahlempfängers sind damit im Inneren des Gehäuses fest montiert. Eine Umstellung des Messstrahls auf einer vorgegebenen Bahn (B), im vorliegenden Fall einer kreisförmigen Bahn, erfolgt ausschließlich durch Verdrehung des mindestens einen Trägerteils, welches entsprechend angepasste optische Umlenkelemente aufweist. Die optischen Umlenkelemente können beispielsweise in Form von Spiegeln gebildet sein. Diese Ausführungsform hat den Vorteil, dass die empfindlichen optischen Elemente des Fotometers als unbewegliche Bauteile realisiert sind. Dennoch wird eine relativ große Verschiebung zwischen dem Referenzkanal und dem Messkanal ermöglicht, so dass die erfindungsgemäßen Vorteile einer großen Variabilität in den Messungen, einer relativ einfachen Konstruktion und einer hohen Betriebssicherheit gegeben sind.

Nach einer weiteren vorteilhaften Ausgestaltung der Erfindung weist das Trägerteil im Gehäuse des Fotometers eine im Wesentlichen U-förmige Form auf, deren Innenabmessung angepasst ist zur Aufnahme des zum Medium hin offenen Messspaltes des Gehäuses. Die U-Form des Trägerteils, welches einstückig sowohl den Messstrahlsender als auch den Messstrahlempfänger trägt, hat den Vorteil, dass eine sehr robuste Lagerung und Halterung der für die Messung kritischen Bauteile gewährleistet ist. Die Verstellung der Position des Messstrahls von dem Referenzkanal in den Messkanal kann durch eine transversale Bewegung des Trägerteils erfolgen oder durch eine drehende Verstellung, beispielsweise auf einem Kreisabschnitt, insbesondere auf einem Halbkreisabschnitt. Nach einer weiteren vorteilhaften Ausgestaltung der Erfindung können der Messstrahlsender und der Messstrahlempfänger in Form von Eintrittsöffnungen und Austrittsöffnungen jeweils von Lichtwellenleitern realisiert sein. Eine Verwendung von Lichtwellenleitern als Empfangs- bzw. Sendebauteile hat den Vorteil, dass die Baugröße des Fotometers weiter verringert werden kann. Außerdem ist eine flexiblere Verstellung und Leitung der Intensitätsmesswerte durch die Lichtleiter im Inneren des Gehäuses des Fotometers gegeben.

Nach einer weiteren vorteilhaften Ausgestaltung der Erfindung sind die Fenster am Messspalt des Gehäuses des Fotometers mit elastischen Halterungen versehen, und es sind Antriebe zur Schwingungsanregung an den Fenstern vorhanden. Die Schwingungsanregung kann beispielsweise über piezoelektrische Keramiken erfolgen. Eine Schwingungsanregung der Fenster hat den Vorteil, dass eine Ablagerung von Schmutz und Partikeln, die sich in dem zu untersuchenden Fluid befinden, hierdurch vermieden wird. Aufwendige Reinigungseinrichtungen, wie zum Beispiel Wischer oder spezielle Düsenstrahleinrichtungen, sind damit nicht erforderlich. Die permanente Funktionsweise auch über einen längeren Zeitraum des Fotometers ist damit gewährleistet. Eine Schwingungsanregung kann beispielsweise im Bereich von 20 kHz bis 120 kHz liegen. Entsprechende Antriebe sind gut im Inneren des Gehäuses integrierbar. Die Verwendung einer Piezokeramik hat den Vorteil, dass ein vergleichsweise niedriger Energieeinsatz erforderlich ist und die Reinigung auch verschleißfrei über einen langen Zeitraum gewährleistet ist.

Nach einer weiteren vorteilhaften Ausgestaltung der Erfindung ist der Messkanal in einem vorherbestimmten, vergleichsweise großen Abstand zu dem Referenzkanal angeordnet. Vorzugsweise beträgt der Abstand zwischen den beiden Kanälen 2 cm bis 4 cm. Durch den großen Abstand zwischen Messkanal und Referenzkanal wird eine negative gegenseitige Beeinflussung der beiden wiederholten Intensitätswertmessungen verhindert. Zwischen den beiden Kanälen können auch Abschirmelemente vorgesehen sein, welche die Ablenkung von Streulicht in Richtung in den anderen der beiden Kanäle verhindern.

Nach einer weiteren vorteilhaften Ausgestaltung der Erfindung weist das Gehäuse des Fotometers eine längliche Röhrenform auf und ist vollständig gekapselt ausgebildet. Eine vollständige Kapselung des Gehäuses hat den Vorteil, dass es fluiddicht ist und gegenüber Beschädigungen und einem Eindringen von Elementen von außen gesichert ist. Eine gekapselte Form des Gehäuses ist vorzugsweise mit Mitteln zum Öffnen für eine Wartung und Reparatur des Fotometers versehen.

Weitere Vorteile, Merkmale und Einzelheiten ergeben sich aus den Unteransprüchen sowie der nachfolgenden Beschreibung, in der unter Bezugnahme auf die Zeichnung bevorzugte Ausführungsbeispiele im Einzelnen beschrieben sind. Dabei können die in der Zeichnung dargestellten sowie in der Beschreibung und in den Ansprüchen erwähnten Merkmale jeweils einzeln für sich oder in beliebiger Kombination erfindungswesentlich sein.

In der Zeichnung zeigen:
- Fig. 1: eine schematische Seitenansicht eines ersten Ausführungsbeispiels eines erfindungsgemäßen Fotometers zur Veranschaulichung der äußeren Gestalt;
- Fig. 2 und 3: schematische Draufsichten eines zweiten Ausführungsbeispiels eines erfindungsgemäßen Fotometers jeweils in Messposition und in Referenzierungsposition;
- Fig. 4 und 5: schematische Draufsichten eines dritten Ausführungsbeispiels eines erfindungsgemäßen Fotometers jeweils in Messposition und in Referenzierungsposition;
- Fig. 6: eine schematische Draufsicht eines vierten Ausführungsbeispiels eines Fotometers;
- Fig. 7: eine schematische Draufsicht eines fünften Ausführungsbeispiels eines Fotometers;
- Fig. 8: eine schematische Detailansicht einer Ausführungsform des Messstrahlsenders für das erfindungsgemäße Fotometer; und
- Fig. 9: eine schematische Detailansicht einer Ausführungsform der Erfindung hinsichtlich der Fenster mit Schwingungsantrieben.

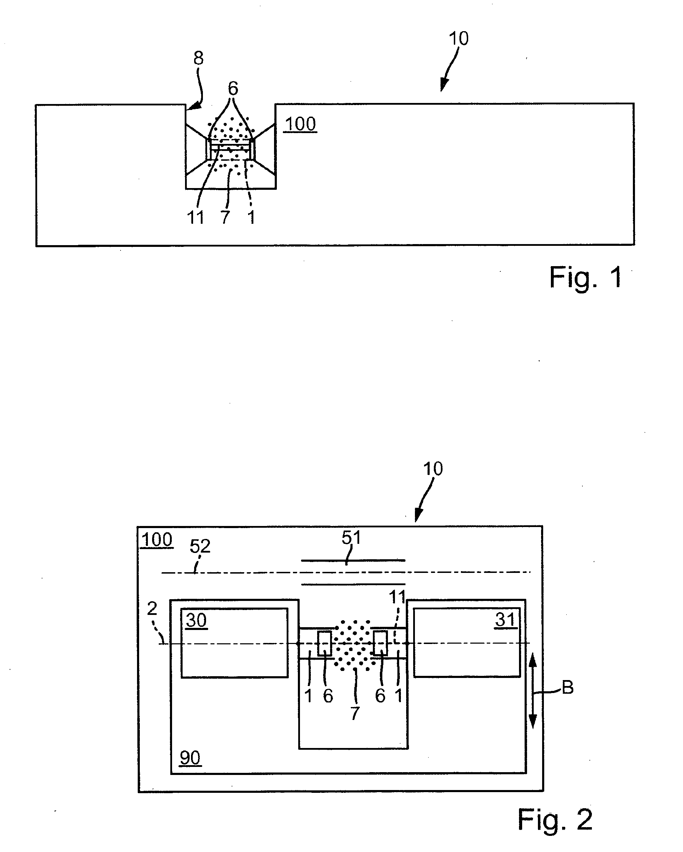

Die Fig. 1 zeigt in einer schematischen Draufsicht ein erstes Ausführungsbeispiel eines erfindungsgemäßen Fotometers zur In-situ-Messung von Stoffen in Fluiden. Ein rohrförmiges, längliches Gehäuse 100 ist, bei diesem Ausführungsbeispiel auf etwa einem Drittel der Längserstreckung des Gehäuses 100, mit einem Gehäusespalt 8 versehen, der zum Fluid hin offen ist. Der Messspalt 8 ist hier mit einer Tiefe von in etwa der Hälfte des Durchmessers des Gehäuses vorgesehen und weist an den gegenüberliegenden Seiten zwei Messfenster 6 auf, die für einen Messstrahl 11 seitens des Inneren des Gehäuses 100 des Fotometers 10 durchlässig sind. Das Gehäuse 100 des Fotometers 10 ist vollständig gekapselt ausgebildet, d. h. es ist fluiddicht und geeignet, um in ein flüssiges Medium vollständig eingetaucht zu werden. Das Fotometer 10 ist mit Verbindungsleitungen zur Energieversorgung und zur Übertragung von Messwerten nach außen von dem flüssigen Medium versehen (in Fig. 1 nicht dargestellt). Im Inneren des Gehäuses 100 ist das Fotometer 10 mit einem Messstrahlsender 30 und einem Messstrahlempfänger 31 ausgestattet (vgl. Fig. 2 zum Beispiel). Ferner weist das Fotometer 10 nach diesem Ausführungsbeispiel ein spezifisch bewegbares Trägerteil im Inneren des Gehäuses 100 auf, das derart ausgebildet ist, dass ein erzeugter Messstrahl 11 von der Position des Messkanals 1 zwischen den beiden Fenstern 6 in einem Messspalt 7 verstellt werden kann zu einem von dem Messkanal 1 verschiedenen Referenzkanal 51. Die Funktion und der Aufbau des Inneren des Fotometers 10 gemäß der Erfindung und die Verstellung des Messstrahls 11 auf einer vorgegebenen Bahn B wird im Zusammenhang mit den nachfolgenden Figuren mehr im Detail erläutert werden. Bei dem Ausführungsbeispiel nach der Fig. 1 sind die Messfenster 6 in einem vorherbestimmten Abstand zueinander im Messspalt 7 an konisch vorragenden Abschnitten montiert, so dass die Länge des Messstrahls 11, d.h. die Abmessung zwischen den beiden Messfenstern 6, geringer ist als diejenige des Messspalts 8 im Gehäuse 100. Die Geometrie und insbesondere der Durchmesser des Messkanals 1, durch welchen der Messstrahl 11 geleitet wird, ist vorzugsweise gleich zu derjenigen eines Referenzkanals, der sich im Inneren des Gehäuses 100 befindet und zu dem der Messstrahl 11 über ein auf einer vorherbestimmten Bahn B bewegliches Trägerteil verstellbar ist. Die Messfenster 6 können alternativ auch bündig mit den Seitenwänden des Messspalts 8 im Gehäuse 100 montiert sein. Vorzugsweise sind die Messfenster 6 elastisch gelagert und mit schwingungserzeugenden Elementen, wie zum Beispiel elektrisch aktivierbaren Piezokeramiken, versehen.

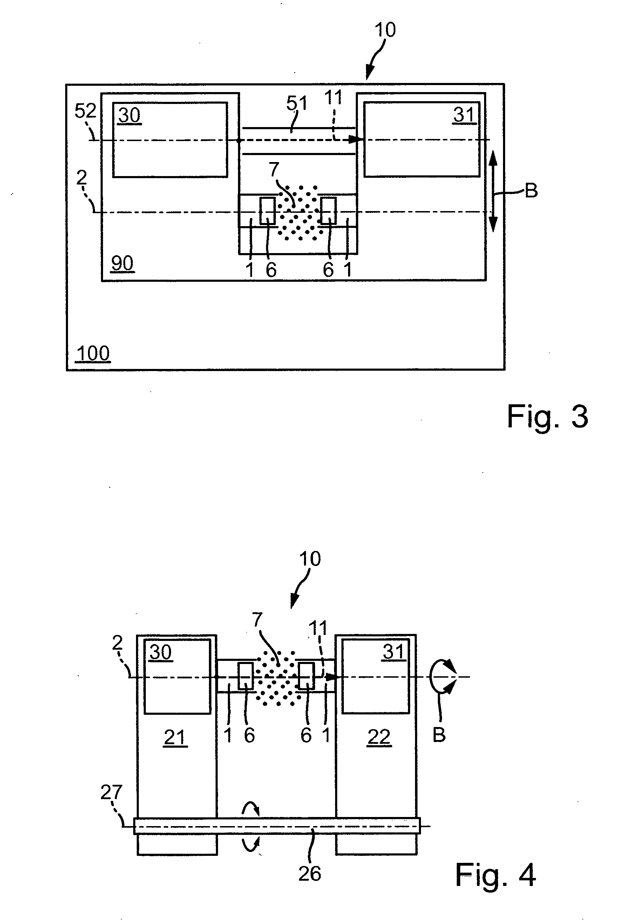

In den Fig. 2 und 3 sind in schematischen Draufsichten die Funktionsweise und der innere Aufbaus des Fotometers 10 gemäß einer Ausführungsform der Erfindung in verschiedenen Positionen dargestellt. Während der Messkanal 1 sich im Bereich des Messspalts 7 zwischen den Messfenstern 6 befindet (vgl. auch Fig. 1), ist ein entfernt davon angeordneter Referenzkanal 51 im Inneren des Gehäuses 100 gebildet. Der Referenzkanal 51 ist dabei so gebildet, dass durch eine Verlagerung eines Trägerteils 90 der zwischen dem Messstrahlsender 30 und dem Messstrahlempfänger 31 erzeugte Messstrahl von der Position des Messkanals 1 (vgl. Fig. 2) in die Position des Referenzkanals 51 (vgl. Fig. 3) verstellt werden kann. Bei dem Ausführungsbeispiel der Fig. 2 und 3 erfolgt diese Umstellung des Messstrahls 11 auf einer geradlinigen Bahn B, wie es mit dem Bewegungspfeil in den Fig. 2 und 3 veranschaulicht ist. Der Messstrahl 11 wird somit in einer Art Parallelverschiebung von dem Messkanal 1, in welchem die Messung von Partikeln eines Stoffs beispielsweise im Inneren eines zu untersuchenden Fluids analysiert wird, in die Position eines Referenzkanals 51 verstellt. In dem Referenzkanal 51 erfolgt eine Referenzierung des Fotometers 10, wobei vorteilhafterweise die gleichen Komponenten und die gleichen Parameter wie bei der Messung im Messkanal 1 verwendet werden. Eine lineare Verstellung des Trägerteils 90 und damit der auf ihm montierten Messstrahlsender 30 und Messstrahlempfänger 31 kann mit beliebigen Mitteln realisiert sein. Beispielsweise wird die lineare Verstellung oder Parallelverschiebung über mechanische Schienen und Führungen sowie elektrisch betriebene Aktuatoren oder dergleichen verwirklicht. Die Achse 2 des Messkanals ist zu der Achse 52 des Referenzkanals parallel, so dass durch eine einfache seitliche Verstellung des Trägerteils 90 entlang der Bahn B eine Umschaltung zwischen der Messposition und der Referenzierungsposition (vgl. Fig. 3) erfolgt. Im Gehäuse 100 des Fotometers 10 sind bei diesem Ausführungsbeispiel der Erfindung ferner Erfassungs-und Auswertungsmittel vorgesehen, mit welchen die Intensitätswerte der Messung im Messkanal 1 und die Werte bei der Referenzierung im Referenzkanal 51 erfasst werden und ausgewertet werden können. Hierdurch wird die Vorrichtung auch bei einer alterungsbedingten Veränderung der Komponenten immer betriebsbereit gehalten. Der Messstrahlsender 30 kann ein normales Licht oder eine andere lichtemittierende Komponente sein, wie zum Beispiel ein UV-Licht, ein Laserlicht oder ähnliches. Der Messstrahlempfänger 31 weist ebenfalls eine dem Fachmann des Gebiets bekannte herkömmliches Form auf und ist beispielsweise in Form von Fotodioden oder anderen elektronischen lichtsensiblen Bauteilen verwirklicht. Die Wellenlänge des Messstrahls kann entsprechend den zu messenden Inhaltsstoffen in einem Fluid eingestellt werden. Somit kann beispielsweise ein Nitratgehalt oder ein Gehalt von anderen organischen Stoffen im Abwasser oder im Meerwasser mit der Sonde des Fotometers 10 untersucht werden.

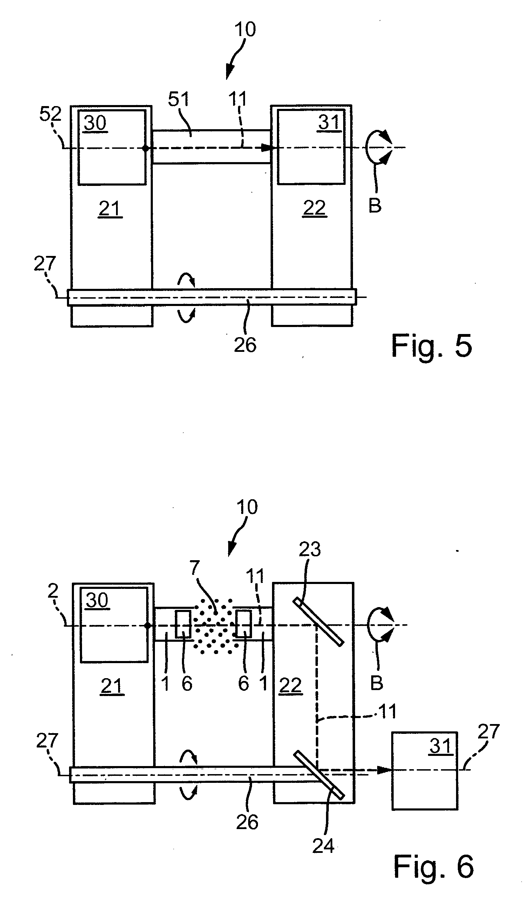

Die Fig. 4 und 5 zeigen in verschiedenen schematischen Positionsdarstellungen ein weiteres Ausführungsbeispiel eines erfindungsgemäßen Fotometers 10. Aus Vereinfachungsgründen ist in diesen Figuren und den folgenden das Gehäuse 100 des Fotometers 10 nicht mehr dargestellt. Es weist jedoch eine ähnliche Form und Ausgestaltung auf wie bei den vorherigen Ausführungsbeispielen und ist insbesondere mit einem definierten Messspalt 7 und gegenüberliegenden Fenstern 6 ausgestattet, welche eine Messung mittels eines Messstrahls 11 im Fluid selbst, d. h. an Ort und Stelle, bei eingetauchtem Fotometer 10 (sogenannte *"In-situ-Messung")* ermöglichen. Bei dem Ausführungsbeispiel nach den Fig. 4 und 5 wird das Trägerteil 21, 22 nicht mehr auf einer linearen vorherbestimmten Bahn B verstellt, sondern auf einer kreisförmigen Bahn B. Dazu sind der Messstrahlsender 30 und der Messstrahlempfänger 31 jeweils auf einem separaten Trägerteil 21, 22 montiert. Die beiden Trägerteile 21, 22 sind starr mit einer drehbaren Welle 26 verbunden. Der Messstrahlsender 30 und der Messstrahlempfänger 31 werden hierdurch um die Drehachse 27 der Welle 26 herum auf einer gemeinsamen kreisförmigen Bahn B verstellt, wie es mit dem Rotationspfeil B in den Figuren angedeutet ist. Die Verstellung entlang der vorgegebenen Bahn B erfolgt auch hier erfindungsgemäß zum Umschalten zwischen einer eigentlichen Messung mit dem Messstrahl 11 in einem Messkanal 1 (Fig. 4), der im Bereich eines Messspalts 7 an der Außenseite des Gehäuses 100 (nicht dargestellt) liegt und einem davon getrennten, d. h. an einer anderen Stelle positionierten Referenzkanal 51, wie es in der Fig. 5 veranschaulicht ist. Die Rotationsverstellung entlang der kreisförmigen Bahn B hat den Vorteil, dass auf relativ kleinem Bauraum ein vergleichsweise großer Abstand zwischen dem Referenzkanal 51 und dem Messkanal 1 ermöglicht wird. Außerdem sind keine zusätzlichen mechanischen Bauelemente, wie Führungsschienen oder Zahnstangen etc., erforderlich, um die Umstellung des Messstrahls 11 von der Referenzierungsposition in die Messposition durchzuführen. Eine einfache drehbare Welle 26, die über einen entsprechenden elektrischen Motor oder ähnliches angetrieben werden kann, genügt für die Realisierung der erfindungsgemäßen Referenzierung. Auch bei diesem Ausführungsbeispiel der Fig. 4 und 5 sind entsprechende Erfassungs- und Auswertungsmittel für die Intensitätswerte einerseits im Referenzkanal 51 und andererseits im Messkanal 1 vorhanden. Die Erfassung, Auswertung und Speicherung der Messwerte sowie deren Anzeige erfolgt auf die in diesem Gebiet übliche Art und Weise, wie sie dem Fachmann bekannt ist.

Auch bei dem weiteren Ausführungsbeispiel eines Fotometers 10 gemäß der Fig. 6 erfolgt die Umstellung des mindestens einen Trägerteils im Inneren des Gehäuses 100 (nicht dargestellt) durch eine kreisförmige Bewegung B, d.h. eine Bewegung auf einem Kreisabschnitt, vorzugsweise in einem Winkelbereich von 30° bis 90°. Anders als bei dem vorherigen Ausführungsbeispiel ist hier jedoch lediglich der Messstrahlsender 30 auf einem in einer Drehbewegung beweglichen Trägerteil 21 montiert. Der Messstrahlempfänger 31 dagegen ist mit seiner Mittelachse in der Drehachse 27 der Welle 26 fest im Gehäuse 100 des Fotometers 10 montiert. Die Drehung der Welle 26 um die Rotationsachse 27 erzeugt dennoch auch hier eine Verstellung des Messstrahls 11 von der in der Fig. 6 dargestellten Messposition im Messkanal 1 in den nichtdargestellten Referenzkanal 51 gemäß der vorgegebenen kreisförmigen Bewegungsbahn B (vgl. Bewegungspfeil B in Fig. 6). Der vom Messstrahlsender 30 durch das Messfenster 6 gesendete Messstrahl 11 wird, wie es mit der gestrichelten Linie in der Fig. 6 angedeutet ist, durch das gegenüberliegende Messfenster 6 wieder im Inneren des Gehäuses aufgenommen und über zwei Spiegel 23, 24, welche fest auf einem zweiten Trägerteil 22 montiert sind, in die Mittelachse des Messstrahlempfängers 31 umgeleitet. Da sich der Messstrahlempfänger 31 in der Rotationsachse 27 der Welle 26 befindet, kann dieser auch nach dieser Ausführungsform der Erfindung fest im Inneren des Gehäuses 100 montiert sein. Dies hat Vorteile dahingehend, dass die anfälligen optischen Bauteile des Messstrahlempfängers 31 keiner unnötigen Erschütterung ausgesetzt sind und zudem die Verkabelung mit den Anschlusskabeln und den Signalleitungen vereinfacht wird. Die Funktionssicherheit wird hierdurch verbessert und eine langfristige Betriebsdauer des Fotometers 10 gewährleistet.

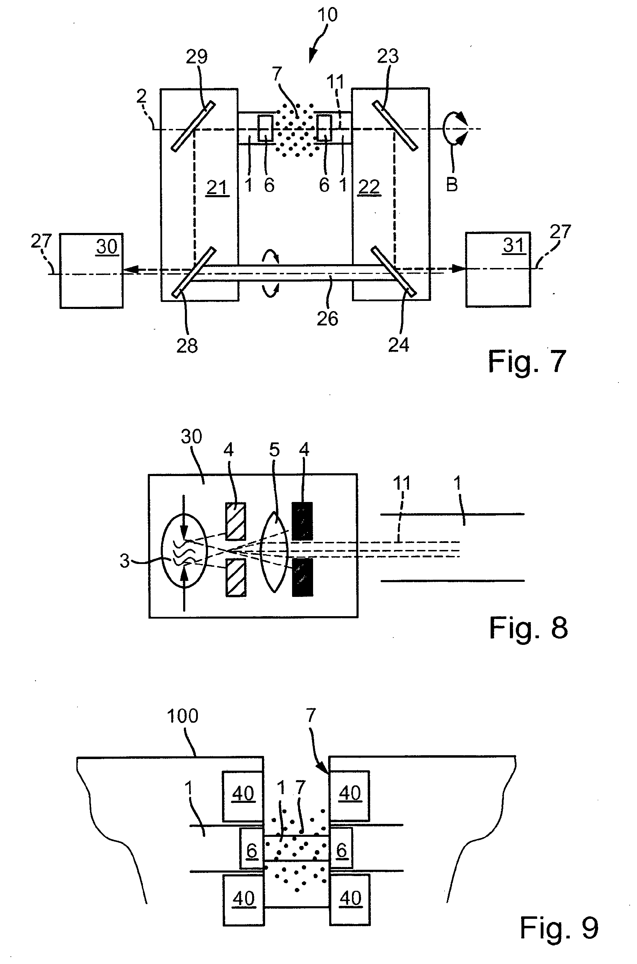

Gemäß dem weiteren Ausführungsbeispiel nach der Fig. 7 ist im Inneren des Gehäuses 100 des Fotometers ein ähnlicher Aufbau wie bei den vorherigen beiden Ausführungsbeispielen vorgesehen. Die beiden Trägerteile 21, 22 sind gemäß einer vorgegebenen kreisförmigen Bahn B mittels einer starr mit ihnen verbundenen Welle 26 verstellbar. Die Welle 26 dreht um eine Rotationsachse 27, wobei auf den Trägerteilen 21, 22 optische Umlenkungsmittel, wie zum Beispiel Spiegel 23, 24, 28, 29, montiert sind, mittels welcher der zwischen dem Messstrahlsender 30 und dem Messstrahlempfänger 31 erzeugte Messstrahl 11 erfindungsgemäß verlagert werden kann. Die Spiegel 23, 24, 28, 29 sind jeweils in einem 45°-Winkel an der Stelle der Rotationsachse 27 der Welle 26 und am gegenüberliegenden freien Ende der Trägerteile 21, 22 auf Höhe des Messkanals 1 montiert. Ein Referenzkanal 51 (in der Fig. 7 nicht dargestellt) befindet sich auf einer entsprechenden Position im Abstand zu der Welle 26, so dass eine Drehverstellung der Welle 26 entlang der Bahn B zu einer Umstellung des Messstrahls 11 zwischen den freien Enden der Trägerteile 21, 22 in eine Position des Referenzkanals 51 für die Referenzierung des Fotometers 10 erfolgt. Bei diesem Ausführungsbeispiel nach der Fig. 7 können sowohl der Messstrahlsender 30 als auch der Messstrahlempfänger 31 fest im Inneren des Gehäuses montiert sein, da sie beide gezielt mit ihren Mittelachsen auf Höhe der Rotationsachse 27 der Welle 26 positioniert sind, so dass mit vergleichsweise einfachen optischen Mitteln (hier im Beispiel vier Spiegel) eine Umlenkung des Messstrahls 11 auf die beiden gewünschten Positionen, einerseits diejenige des Messkanals 1 zwischen den Messfenstern 6 im Messspalt 7 des Gehäuses und andererseits diejenige des Referenzkanals 51, möglich ist. Die Drehverstellung der Welle 26 kann mit geeigneten Mitteln, beispielsweise einem Elektromotor, erfolgen. Auch hier sind im Inneren des nichtdargestellten Gehäuses 100 des Fotometers 10 entsprechende Auswertungsmittel und Erfassungsmittel zur Erfassung, Auswertung und Speicherung der gemessenen Intensitätswerte vorhanden. Das Fotometer 10 ist vorzugsweise auch hier in einer vollständig gekapselten Bauform eines äußeren Gehäuses 100 ausgeführt, so dass ein Eintauchen in das zu analysierende flüssige Medium ermöglicht wird.

In den Fig. 8 und 9 sind jeweilige Detailansichten einerseits eines möglichen Aufbaus eines Messstrahlsenders 30 und andererseits der Messfenster 6 für ein erfindungsgemäßes Fotometer 10 dargestellt. Die Fig. 8 zeigt eine mögliche Ausführungsform eines Messstrahlsenders 30, bei dem ein Messstrahl 11 von einer vorherbestimmten Form erzeugt wird, der nach der Erfindung vorzugsweise einen kleineren Durchmesser aufweist als der Messkanal 1 bzw. der Referenzkanal 51, beispielsweise 3/4 des Durchmessers der Kanäle 1, 51. Der Messstrahlsender 30 ist hier durch eine Lampe 3 gebildet, die hinter einer Blende 4 und einer Optik 5 beispielsweise in Form einer Linse zum gezielten Bündeln des Messstrahls 11 positioniert ist. Hinter der Linse 5 befindet sich eine zweite Blende 4, so dass ein in etwa paralleler Messstrahl 11 von einem vorherbestimmten Durchmesser aus dem Messstrahlsender 30 austritt.

Bei dem Beispiel nach der Fig. 9 sind die Messfenster 6 an gegenüberliegenden Positionen von dem Messspalt 7 im Gehäuse 100 des Fotometers 10 nicht starr eingebaut, sondern flexibel, d. h. mit elastischen Mitteln oder ähnlichem gelagert. Die Messfenster 6 sind ferner beidseitig von dem Messkanal 1 mit jeweiligen Antrieben 40 einer Schwingungserzeugungseinrichtung versehen, so dass die Fenster 6 in eine permanente oder periodische Schwingung versetzt werden können. Die Schwingungserzeugung an den Fenstern 6 hat den Vorteil, dass eine Ablagerung von Schmutzpartikeln oder organischen Stoffen oder Pflanzen an der Außenseite verhindert wird. Eine wiederholte Reinigung außerhalb des Mediums für die Aufrechterhaltung des korrekten Betriebs des Fotometers 10 ist damit nicht erforderlich. Die Schwingungserzeugungseinrichtungen mit den Antrieben 40 können beispielsweise in Form von piezoelektrischen Keramiken ausgebildet sein, so dass mit vergleichsweise geringem Energieaufwand eine Schwingungserzeugung an den Fenstern 6 ermöglicht wird.

Andere Formen von Einrichtungen zur Schwingungserzeugung können ebenfalls gemäß der Erfindung eingesetzt werden. Beispiele für derartige Schwingungserzeuger sind auch in der auf die gleiche Anmelderin zurückgehenden DE 198 11 876 A1 beschrieben und offenbart, die diesbezüglich hier unter Bezugnahme ausdrücklich mit aufgenommen ist. Die Schwingungserzeugungsvorrichtung der Fenster 6 ist vorzugsweise derart gebildet, dass Schwingungen in einem Frequenzbereich von 20 kHz bis 120 kHz erzeugt werden können. Aufwendige Reinigungseinrichtungen oder wiederholte Wartungsarbeiten zum Reinigen der Außenseite, im Speziellen der Fenster, des Fotometers 10 können so vermieden werden. Die Erfindung ist nicht auf die beschriebenen Ausführungsbeispiele beschränkt und umfasst sämtliche in den Schutzbereich der nachfolgenden Ansprüche fallenden Abwandlungen und Ausführungsformen. Insbesondere ist das erfindungsgemäße Fotometer nicht auf eine Anwendung einer In-situ-Messung in einem flüssigen Medium begrenzt und kann auch in gasförmigen Medien entsprechend eingesetzt werden. Die äußere Form des Gehäuses 100 kann anstatt einer röhrenförmigen Form, wie sie in der Fig. 1 gezeigt ist, eine andere Gestalt aufweisen, solange ein für das zu messende Medium zugänglicher Messspalt 7 vorhanden ist. Die Umstellung des Messstrahls von der Position der Referenzierung in die Position des Messkanals kann mit anderen Mitteln als den beschriebenen erfolgen.

## Patentansprüche

1. Fotometer (10) zur Messung von fotometrischen Größen in einem flüssigen Medium, insbesondere zur Bestimmung von Inhaltsstoffen in Wasser oder wässrigen Medien, mit einem Gehäuse (100), welches angepasst ist, um in das zu analysierende Medium für eine Messung an Ort und Stelle eingebracht zu werden, mit einem Licht emittierenden Messstrahlsender (30) und einem Messstrahlempfänger (31), welche jeweils hinter gegenüberliegenden Messfenstern (6) an einem zum Medium hin offenen Messspalt (7) im Gehäuse (100) angeordnet sind, wobei zur Messung einer Lichtabsorption im Medium ein Messstrahl (11) in einem Messkanal (1) in dem Messspalt (7) von mindestens einer vorherbestimmten Wellenlänge erzeugt wird, **dadurch gekennzeichnet, dass** im Gehäuse (100) ein vom Messkanal (1) getrennter Referenzkanal (51) für eine Referenzmessung vorhanden ist, dass mindestens ein auf einer vorgegebenen Bahn (B) im Gehäuse (100) bewegbares Trägerteil (90, 21, 22) für den Messstrahlsender (30) und den Messstrahlempfänger (31) vorgesehen ist, welches Trägerteil (90, 21, 22) derart ausgebildet ist, dass es auf der vorgegebenen Bahn (B) von dem Messkanal (1) in den Referenzkanal (51) und zurück bewegbar ist zur Messung jeweiliger Intensitätswerte des Messstrahls (11) im Messkanal (1) und im Referenzkanal (51), und dass Mittel zur Erfassung und Auswertung der gemessenen Intensitätswerte vorgesehen sind, welche im Gehäuse (100) integriert sind.

2. Fotometer nach Anspruch 1, **dadurch gekennzeichnet, dass** der Messstrahlsender (30) und der Messstrahlempfänger (31) auf einem gemeinsamen Trägerteil (90) montiert sind, welches im Gehäuse (100) auf einer linearen Bahn (B) zur Verstellung des Messstrahls (11) bewegbar ist.

3. Fotometer nach einem der vorhergehenden Ansprüche, **dadurch gekennzeichnet, dass** der Messkanal (1) und der Referenzkanal (51) eine im Wesentlichen gleiche Geometrie, insbesondere einen gleichen Querschnitt und eine gleiche Länge, aufweisen.

4. Fotometer nach einem der vorhergehenden Ansprüche, **dadurch gekennzeichnet, dass** die Messung der Intensitätswerte im Messkanal (1) und im Referenzkanal (51) mit identischen Parametern und/oder Komponenten realisiert ist.

5. Fotometer nach einem der vorhergehenden Ansprüche, **dadurch gekennzeichnet, dass** der Querschnitt des Messstrahls (11) geringer ist als der Querschnitt des Messkanals (1) und des Referenzkanals (51).

6. Fotometer nach Anspruch 5, **dadurch gekennzeichnet, dass** die Form des vom Messstrahlsender (30) emittierten Messstrahls (11) durch optische Elemente, insbesondere durch Blenden (4) und/oder Optiken (5), definiert ist.

7. Fotometer nach einem der vorhergehenden Ansprüche, **dadurch gekennzeichnet, dass** der Messstrahlsender (30) auf einem ersten Trägerteil (21) und der Messstrahlempfänger (31) auf einem zweiten Trägerteil (22) montiert ist und dass die Trägerteile (21, 22) mit einer Welle (26) starr verbunden sind, welche um eine Rotationsachse (27) drehbar ist

8. Fotometer nach einem der vorhergehenden Ansprüche, **dadurch gekennzeichnet, dass** das Trägerteil (90) eine im Wesentlichen U-förmige Form aufweist mit einer Innenabmessung des U-Innenspaltes, welche geeignet ist, dass der zum Medium offene Messspalt (7) des Gehäuses (100) darin aufgenommen werden kann.

9. Fotometer nach einem der vorhergehenden Ansprüche, **dadurch gekennzeichnet, dass** der Messstrahlsender (30) und der Messstrahlempfänger (31) in der Form von Eintrittsöffnungen und Austrittsöffnungen von Lichtwellenleitern jeweils realisiert sind.

10. Fotometer nach einem der vorhergehenden Ansprüche, **dadurch gekennzeichnet, dass** die Fenster (6) am Messspalt (7) mit elastischen Halterungen und mit Antrieben (40) zur Schwingungsanregung versehen sind.

11. Fotometer nach einem der vorhergehenden Ansprüche, **dadurch gekennzeichnet, dass** der Messkanal (1) in einem vorherbestimmten großen Abstand zu dem Referenzkanal (51) von vorzugsweise 2 cm bis 4 cm positioniert ist.

12. Fotometer nach einem der vorhergehenden Ansprüche, **dadurch gekennzeichnet, dass** das Gehäuse (100) eine längliche Röhrenform aufweist und vollständig gekapselt ausgebildet ist.

## Claims

1. Photometer (10) for measuring the photometric quantities in a liquid medium, in particular for the determination of substances present in water or aqueous media, comprising a housing (100) which is adapted to perform an on-the-spot measurement in the medium to be analysed, a light-emitting measuring beam transmitter (30) and a measuring beam receiver (31), both arranged in the housing (100), and each behind opposing windows (6) at a measuring gap (7) open to the medium, wherein a measuring beam (11) of at least one predetermined wavelength is generated for measuring light absorption in the medium in a measuring channel (1) in the measuring gap (7), **characterised in that**, in the housing (100), a reference channel (51), separate from the measuring channel (1), is present for taking a reference measurement, that at least one movable support member (90, 21, 22) is provided on a predetermined path (B) in the housing (100) for carrying the measuring beam transmitter (30) and the measuring beam receiver (31), wherein said support member (90, 21, 22) is designed such that it is movable back and forth on the predetermined path (B) from the measuring channel (1) to the reference channel (51) for measuring the respective intensity values of the measuring beam (11) in the measuring channel (1) and in the reference channel (51), and that means are provided, incorporated in the housing (100), for acquiring and evaluating the measured intensity values.

2. Photometer according to claim 1, **characterised in that** the measuring beam transmitter (30) and the measuring beam receiver (31) are mounted on a common support member (90) which is movable in the housing (100) on a linear path (B) for shifting the measuring beam (11).

3. Photometer according to one of the preceding claims, **characterised in that** the measuring channel (1) and the reference channel (51) have substantially the same geometry, in particular the same cross section and same length.

4. Photometer according to one of the preceding claims, **characterised in that** the measurement of intensity values in the measuring channel (1) and in the reference channel (51) is realised with identical parameters and/or components.

5. Photometer according to one of the preceding claims, **characterised in that** the cross section of the measuring beam (11) is smaller than the cross section of the measuring channel (1) and of the reference channel (51).

6. Photometer according to claim 5, **characterised in that** the shape of the measuring beam (11) emitted from the measuring beam transmitter (30) is defined by optical elements, in particular by apertures (4) and/or lenses (5).

7. Photometer according to one of the preceding claims, **characterised in that** the measuring beam transmitter (30) is mounted on a first support member (21) and the measuring beam receiver (31) is mounted on a second support member (22) and that the support members (21, 22) are rigidly connected to a shaft (26) which is rotatable about a rotational axis (27).

8. Photometer according to one of the preceding claims, **characterised in that** the support member (90) is substantially U-shaped, with an inner dimension of the inner U-gap being suitable such that the measuring gap (7) of the housing (100) open to the medium can be accommodated in it.

9. Photometer according to one of the preceding claims, **characterised in that** the measuring beam transmitter (30) and the measuring beam receiver (31) are each realised in the form of inlet openings and outlet openings of optical waveguides.

10. Photometer according to one of the preceding claims, **characterised in that** the windows (6) at the measuring gap (7) are provided with flexible holders and drives (40) for the stimulation of vibrations.

11. Photometer according to one of the preceding claims, **characterised in that** the measuring channel (1) is positioned at a predetermined large distance from the reference channel (51), preferably 2 cm to 4 cm.

12. Photometer according to one of the preceding claims, **characterised in that** the housing (100) is in the shape of an elongated tube and is completely encapsulated.

## Revendications

1. Photomètre (10) pour la mesure de grandeurs photométriques dans un milieu liquide, en particulier pour la détermination de composants dans de l'eau ou des milieux aqueux, avec un boîtier (100) qui est adapté pour être introduit dans le milieu à analyser pour une mesure in situ, avec un émetteur de faisceau de mesure (30) émettant de la lumière et un récepteur de faisceau de mesure (31) qui sont disposés dans le boîtier (100) respectivement derrière des fenêtres de mesure (6) opposées sur un interstice de mesure (7) ouvert vers le milieu, un faisceau de mesure (11) ayant au moins une longueur d'onde définie préalablement étant produit dans un canal de mesure (1) dans l'interstice de mesure (7) pour mesurer une absorption de lumière dans le milieu, **caractérisé en ce que**, dans le boîtier (100), il y a un canal de référence (51) séparé du canal de mesure (1) pour une mesure de référence, **en ce qu'**au moins une partie de support (90, 21, 22) mobile sur une trajectoire (B) prédéfinie est prévue dans le boîtier (100) pour l'émetteur de faisceau de mesure (30) et le récepteur de faisceau de mesure (31), laquelle partie de support (90, 21, 22) est constituée de telle sorte qu'elle est mobile sur la trajectoire (B) prédéfinie à partir du canal de mesure (1) vers le canal de référence (51) et inversement pour la mesure de valeurs d'intensité respectives du faisceau de mesure (11) dans le canal de mesure (1) et dans le canal de référence (51), et **en ce que** des moyens sont prévus pour la saisie et l'analyse des valeurs d'intensité mesurées et sont intégrés dans le boîtier (100).

2. Photomètre selon la revendication 1, **caractérisé en ce que** l'émetteur de faisceau de mesure (30) et le récepteur de faisceau de mesure (31) sont montés sur une partie de support (90) commune qui est mobile dans le boîtier (100) sur une trajectoire (B) linéaire pour le déplacement du faisceau de mesure (11).

3. Photomètre selon une des revendications précédentes, **caractérisé en ce que** le canal de mesure (1) et le canal de référence (51) présentent une géométrie essentiellement identique, en particulier une section transversale identique et une longueur identique.

4. Photomètre selon une des revendications précédentes, **caractérisé en ce que** la mesure des valeurs d'intensité dans le canal de mesure (1) et dans le canal de référence (51) est réalisée avec des paramètres et/ou des composantes identiques.

5. Photomètre selon une des revendications précédentes, **caractérisé en ce que** la section transversale du faisceau de mesure (11) est plus petite que la section transversale du canal de mesure (1) et du canal de référence (51).

6. Photomètre selon la revendication 5, **caractérisé en ce que** la forme du faisceau de mesure (11) émis par l'émetteur de faisceau de mesure (30) est définie par des éléments optiques, en particulier par des diaphragmes (4) et/ou des optiques (5).

7. Photomètre selon une des revendications précédentes, **caractérisé en ce que** l'émetteur de faisceau de mesure (30) est monté sur une première partie de support (21) et le récepteur de faisceau de mesure (31) est monté sur une deuxième partie de support (22), et **en ce que** les parties de support (21, 22) sont raccordées de façon rigide à un arbre (26) qui peut tourner autour d'un axe de rotation (27).

8. Photomètre selon une des revendications précédentes, **caractérisé en ce que** la partie de support (90) présente une forme essentiellement en U avec une dimension intérieure de l'interstice intérieur en U qui est appropriée pour que l'interstice de mesure (7) du boîtier (100) ouvert vers le milieu puisse y être reçu.

9. Photomètre selon une des revendications précédentes, **caractérisé en ce que** l'émetteur de faisceau de mesure (30) et le récepteur de faisceau de mesure (31) sont réalisés respectivement sous forme d'ouvertures d'entrée et d'ouvertures de sortie de guides d'ondes optiques.

10. Photomètre selon une des revendications précédentes, **caractérisé en ce que** les fenêtres (6) sont munies sur l'interstice de mesure (7) d'éléments de retenue élastiques et d'entraînements (40) pour l'excitation de vibrations.

11. Photomètre selon une des revendications précédentes, **caractérisé en ce que** le canal de mesure (1) est positionné à une grande distance du canal de référence (51) définie préalablement qui est de préférence de 2 cm à 4 cm.

12. Photomètre selon une des revendications précédentes, **caractérisé en ce que** le boîtier (100) présente une forme tubulaire oblongue et est constitué de façon entièrement encapsulée.
